# EUROPÄISCHE PATENTSCHRIFT

(11) **EP 1 068 095 B1**
(45) Veröffentlichungstag und Bekanntmachung des Hinweises auf die Patenterteilung: **10.07.2002**
(21) Anmeldenummer: 99917950.0
(22) Anmeldetag: 01.04.1999
(51) Int. Cl.: B60N 3/02, B60R 21/20

(54) **HALTEGRIFFKONSOLE UND BAUGRUPPE AUS HALTEGRIFFKONSOLE UND KOPF-SEITENGASSACK-MODUL**
HANDHOLD CONSOLE AND SUBASSEMBLY CONSISTING OF THE HANDHOLD CONSOLE AND A SIDE HEAD AIRBAG MODULE
CONSOLE A POIGNEE DE MAINTIEN ET ENSEMBLE FORME D'UNE TELLE CONSOLE ET D'UN MODULE AIRBAG LATERAL AU NIVEAU DE LA TETE

(30) Priorität: 02.04.1998 DE 29806080 U
(43) Veröffentlichungstag der Anmeldung: 17.01.2001
(73) Patentinhaber: TRW Occupant Restraint Systems GmbH & Co. KG, 73553 Alfdorf (DE)
(72) Erfinder: TIETZE, Hans-Joachim, D-73540 Heubach (DE)
(74) Vertreter: Kitzhofer, Thomas, Dipl.-Ing.
(86) Internationale Anmeldenummer: EP9902254
(87) Internationale Veröffentlichungsnummer: WO9951457

(56) Entgegenhaltungen:
- EP-A- 0 800 956
- DE-A- 19 608 275
- DE-A- 19 747 703

## Beschreibung

Die Erfindung betrifft eine Haltegriffkonsole zur Anbringung eines Haltegriffs in einem Kraftfahrzeug sowie eine Baugruppe aus der erfindungsgemäßen Konsole mit einem Kopf-Seitengassack-Modul.

Solche Haltegriffkonsolen sind üblicherweise im Übergangsbereich zwischen Tür und Dach eines Kraftfahrzeugs vorgesehen und fest mit der Karosserie des Fahrzeugs verschraubt, um einem Insassen mit einem an der Konsole montierten Haltegriff eine stabile Möglichkeit zum Festhalten zu bieten. Eine Haltegriffkonsole und ein Haltegriff sind in der gattungsbildenden DE-A-196 08 275 beschrieben. Der Haltegriff ist mit einer am Dachhimmel angeordneten Platte gelenkig so verbunden, daß er aus einer Ruhestellung in eine Betriebsstellung ausgeklappt werden kann. In der Ruhestellung liegt der Haltegriff flach in einer im Dachhimmel ausgebildeten Mulde ist das Fahrzeug mit einer Seitenaufprallschutzeinrichtung in Form eines Kopf-Seitengassacks für den Kopfbereich des Insassen ausgerüstet, die die Seitenscheibe eines Fahrzeugs abdeckt, so ist ein dafür vorgesehenes Seitengassack-Modul ebenfalls im Übergangsbereich zwischen Tür und Dach längs des Dachrahmens des Fahrzeugs angebracht. Der Halterung des Seitengassack-Moduls dient normalerweise eine Rastblechkonsole. Bislang sind also zwei verschiedene Bauteile für die beiden genannten Zwecke vorgesehen gewesen, was die Nachteile eines hohen Montageaufwands, zusätzlicher Bauteilkosten und zusätzlich notwendiger Schraubpunkte in der Karosserie mit sich bringt.

Aufgabe der Erfindung ist es daher, bei einem mit einem Seitengassack ausgestatteten Kraftfahrzeug die Anzahl der Bauteile für eine Haltegriffkonsole und eine Rastblechkonsole sowie den Herstellungsund Montageaufwand zu reduzieren.

Die Lösung dieser Aufgabe wird gemäß der Erfindung dadurch erreicht, daß bei einer Haltegriffkonsole der eingangs genannten Art eine Halterung zur Aufnahme eines Seitengassack-Moduls vorgesehen ist. Das bedeutet, daß die bislang eigenständige Rastblechkonsole in die Haltegriffkonsole integriert ist. Dadurch werden die oben aufgeführten Nachteile vermieden, und es wird zudem eine Gewichtseinsparung im Vergleich zu zwei separaten Baueinheiten erzielt. Außerdem ergeben sich durch den Wegfall einer Baueinheit Vorteile in bezug auf die Herstellungskosten und die Logistik, d.h. die Koordinierung der zugelieferten Bauteile bei der Kraftfahrzeugproduktion vereinfacht sich.

Gemäß einer bevorzugten Ausführungsform der Erfindung ist die Halterung zur Aufnahme eines Seitengassack-Moduls einteilig mit der Haltegriffkonsole ausgeführt, womit die Herstellung und die Montage weiter vereinfacht und die entsprechenden Kosten weiter reduziert werden können.

Die Erfindung betrifft darüber hinaus eine Baugruppe aus einer erfindungsgemäßen Haltegriffkonsole und einem daran formschlüssig befestigten Seitengassack-Modul. Das Seitengassack-Modul hat ein langgestrecktes Aufnahmegehäuse mit einem darin enthaltenen Kopfgassack. Über die Haltegriffkonsole ist das Aufnahmegehäuse am Dachrahmen eines Fahrzeugs befestigbar.

Gemäß einer bevorzugten Ausführungsform ist wenigstens ein Befestigungsmittel vorgesehen, das ein vom Gehäuse ahstehendes Haltemittel und eine entsprechende Befestigungsöffnung in der Halterung umfaßt, wobei das Haltemittel in die entsprechende Befestigungsöffnung eindringt und das Gehäuse an der Halterung hält.

Zur einfachen Fixierung kann bei einem ersten Befestigungsmittel beispielsweise eine Rastnase als Haltemittel vorgesehen sein, welche von der Außenseite des Gehäuses vorsteht und in die Befestigungsöffnung ragt.

Damit das Einführen des Seitengassack-Moduls in die Haltegriffkonsole beim Einbau im Fahrzeug leichter vonstatten geht, ist in der Halterung eines Befestigungsmittels eine Führungsbann vorgesenen, the beim Zusammenschieben des Gehäuses und der Haltegriffkonsole das Haltemittel aufnimmt und in die Befestigungsöffnung führt. Dadurch wird das Ausrichten der Teile zur Schaffung der formschlüssigen Verbindung erleichtert. Darüber hinaus kann jedoch auch zum Beispiel ein Vorsprung am Gehäuse vorgesehen sein, der nichts mit dem Haltemittel zu tun hat, aber lediglich in eine Führungsbahn ragt und der Ausrichtung von Gehäuse und Haltegriffkonsole dient.

Bei einem Befestigungsmittel ist die in der Halterung vorgesehene Befestigungsöffnung vorzugsweise ein in Richtung der Längserstreckung des Gehäuses seine größte Ausdehnung aufweisendes Langloch. Das Vorsehen eines Langlochs hat den Vorteil, daß Gehäuse und Haltegriffkonsole noch in gewissen Grenzen längsverschieblich sind und Toleranzen ausgeglichen werden können.

Bei einem anderen Befestigungsmittel kommt als Haltemittel beispielsweise auch ein Hohlniet in Frage, der gegenüberliegende Wandungsabschnitte des Gehäuses miteinander verbindet. Der Hohlniet selbst kann zum Beispiel seitlich vorstehen und in die Befestigungsöffnung im Gehäuse ragen. Er kann jedoch auch gegenüber der Außenseite des Gehäuses nicht vorstehen und nur als Mutter für eine Schraube dienen, die von außen durch die Befestigungsöffnung in der Halterung ragt und in den Hohlniet eingedreht wird.

Weitere vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In den Zeichnungen zeigen:
- Figur 1 eine perspektivische Ansicht einer Haltegriffkonsole;
- Figur 2 eine Querschnittansicht der Haltegriffkonsole;
- Figur 3 eine perspektivische Ansicht einer erfindungsgemäßen Baugruppe mit einer gegenüber der in Figur 1 gezeigten Haltegriffkonsole modifizierten Haltegriffkonsole und einem Gehäuse als Teil des Seitengassack-Moduls; und
- Figur 4 eine Querschnittansicht der montierten Baugruppe nach der Linie IV-IV in Figur 3.

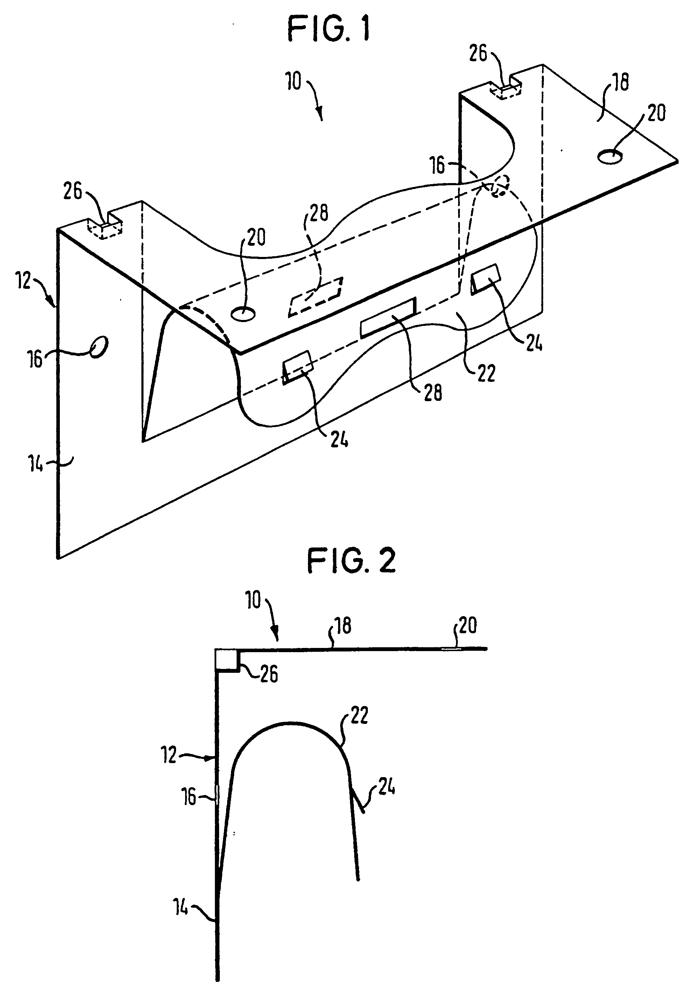

In den Figuren 1 und 2 ist Haltegriffkonsole 10 dargestellt, die aus einem im Ausgangszustand rechteckigen Halteblech 12 hergestellt ist. Das Halteblech 12 weist eine in Längsrichtung verlaufende 90°-Abbiegung auf, durch die das Halteblech in einen Befestigungsabschnitt 14 und einen Halteabschnitt 18 unterteilt ist. Der im eingebauten Zustand der Fahrzeuginnenwand zugewandte Befestigungsabschnitt 14 weist Schraublöcher 16 für die Befestigung der Haltegriffkonsole 10 an der Fahrzeugkarosserie (nicht gezeigt) auf. Der im eingebauten Zustand zur Fahrzeuginnenseite gebogene Halteabschnitt 18 ist mit zwei Schraublöchern 20 zur Befestigung eines Haltegriffs (nicht gezeigt) versehen.

Aus dem ursprünglich ebenen Halteblech 12 ist ein zentraler Bereich entlang drei zueinander im wesentlichen rechtwinkligen Seiten eines Rechtecks ausgeschnitten. Aus dem ausgeschnittenen Bereich ist durch geeignetes Umbiegen zur Fahrzeuginnenseite hin eine Halterung 22 gebildet, wobei die vierte Seite des ausgeschnittenen Bereichs deren Verbindung mit dem restlichen Halteblech 12 darstellt. Eine Halterung 22 mit bogenförmigem Querschnitt, wie in Figur 2 gezeigt, ist dabei verhältnismäßig leicht herzustellen. Die Halterung 22 weist zur Befestigung des Seitengassack-Moduls mehrere Befestigungsöffnungen in Form von Durchstellungen 24 auf, in die entsprechende Rastnasen des Seitengassack-Modulgehäuses einrasten können. Der als Halterung 22 dienende umgebogene Bereich des Halteblechs 12 ist so geformt, daß eine formschlüssige Verbindung mit dem Seitengassack-Modulgehäuse erreicht wird. Der obere Abschnitt des Halteblechs 12 mit den Schraublöchern 20 für die Befestigung des Haltegriffs ragt so weit über die Seitengassack-Modulhalterung 22 zur Fahrzeuginnenseite hinaus, daß ein ausreichender Abstand zwischen montiertem Haltegriff und der Halterung 22 gegeben ist. Im Bereich der Biegestelle im Halteblech 12 sind mehrere entgegen der Hauptbiegerichtung ausgestellte Teilabschnitte 26 vorgesehen, die die Stabilität des abgebogenen Halteblechs 12 unterstützen.

Obwohl zwischen den Schraubpunkten 20 für den Haltegriff Material ausgestanzt und zur Halterung 22 des Seitengassack-Moduls umgeformt wird, ist eine Kraftaufnahme von 1 kN, auf die herkömmliche Haltegriffkonsolen ausgelegt sind, gewährleistet. In das umgeformte Material werden so viele Aussparungen 28 eingestanzt, daß einerseits das Gewicht spürbar reduziert, die für die Aufnahme des Seitengassack-Moduls erforderliche Festigkeit jedoch weiterhin gegeben ist.

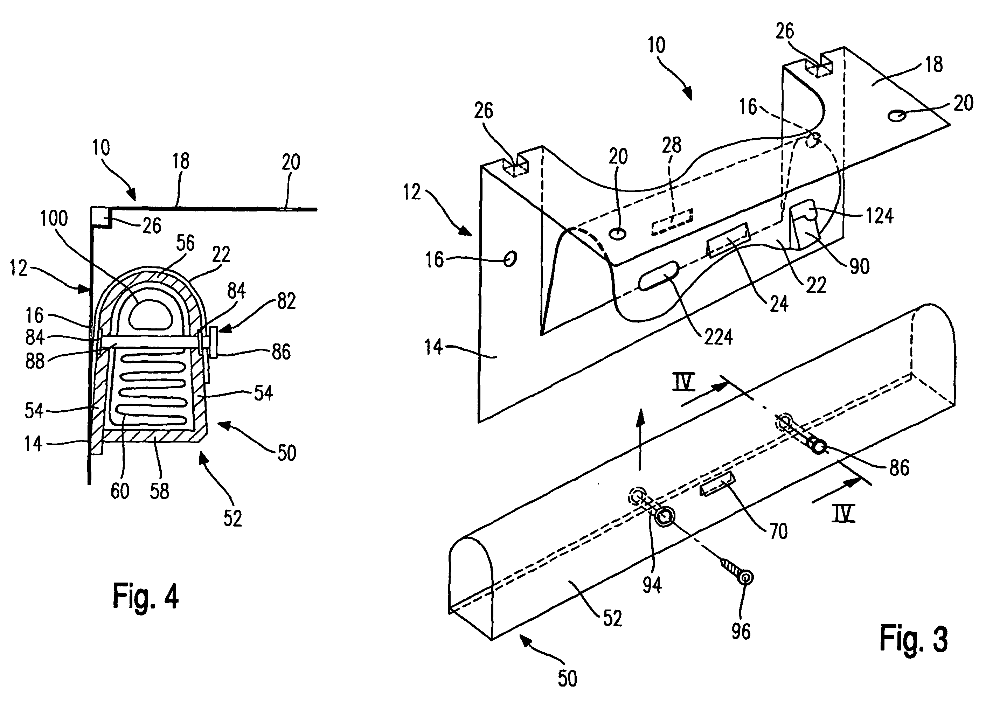

In Figur 3 ist eine Baugruppe bestehend aus der Haltegriffkonsole 10 und einem daran formschlüssig zu befestigenden Seitengassack-Modul 50 dargestellt, von dem aber aus Gründen der Vereinfachung in Figur 3 nur ein Aufnahmegehäuse 52 dargestellt ist. Das Aufnahmegehäuse 52 ist U-förmig (vgl. Figur 4) und hat zwei gegenüberliegende, fast parallele Wandungsabschnitte 54 sowie einen Verbindungssteg 56 und eine Klappe 58, die gemäß Figur 4 nach unten aufschwenken kann. Im Aufnahmegehäuse 50 ist ein Kopf-Seitengassack 60 untergebracht, der die Seitenscheibe oder mehrere Seitenscheiben eines Fahrzeugs im Rückhaltefall abdecken kann. Es sind in den Figuren 3 und 4 verschiedene Befestigungsmittel gezeigt, die der Befestigung des Gehäuses 52 an der Halterung 22 dienen. Diese verschiedenen Befestigungsmittel können einzeln verwendet oder beliebig miteinander kombiniert werden.

Ein erstes Befestigungsmittel besteht aus einem Haltemittel in Form einer von der Außenseite des Gehäuses 52 abstehenden, angeformten Rastnase 70. Beim Einschieben des Gehäuses 52 von unten in die Halterung 22 dringt diese Rastnase 70 in die Befestigungsöffnung in Form der Durchstellungen 24 ein und verhindert, daß das Gehäuse 52 wieder nach unten herausfallen kann.

Ein zweites Befestigungsmittel besteht aus einem Haltemittel in Form einer Distanzhülse, die in Figur 4 näher zu erkennen ist. Diese Distanzhülse kann auch als Hohl- oder Halbhohlniet ausgebildet sein. Die Distanzhülse ist mit 82 bezeichnet und verbindet die gegenüberliegenden Wandungsabschnitte 54 miteinander und hat im Bereich ihrer axialen Enden zwei Flansche 84, die verhindern, daß die Wandungsabschnitte 54 beim Entfalten des Seitengassacks nach außen gedrückt werden. Das rechte Ende der in Figur 4 gezeigten Distanzhülse weist noch einen vom Flansch 84 nach rechts ragenden zapfenförmigen Vorsprung mit einem Bund 86 auf. Zwischen dem Flansch 84 und dem Bund 86 ergibt sich ein Abschnitt mit geringerem Querschnitt, der dem Querschnitt des Schaftes 88 in etwa entspricht, welcher die Flansche 84 miteinander verbindet. Der zapfenförmige Vorsprung mit dem Bund 86 ragt gegenüber dem Gehäuse 52 seitlich vor. Beim Einführen des Gehäuses 52 in Pfeilrichtung nach oben in die Halterung 22 gelangt der zapfenförmige Vorsprung mit dem Bund 86 in eine an der Halterung vorgesehene Führungsbahn 90, die durch Nachaußenbiegen der Halterung gebildet ist. Über die Führungsbahn 90 wird der Bund 86 in die sich daran anschließende Befestigungsöffnung 124 in Form einer Schlüssellochöffnung geführt. Der rechte Abschnitt der Schlüssellochöffnung ist etwas größer. In diesem Abschnitt kann der Bund 86 in die Befestigungsöffnung eingeführt werden und anschließend nach links in den Abschnitt der Schlüssellochöffnung mit geringerer Höhe verschoben werden. Die Halterung 22 liegt dann zwischen dem Flansch 84 und dem Bund 86, wie in Figur 4 zu sehen ist. Der zapfenförmige Vorsprung mit dem Bund 86 dient in diesem Fall auch als Haltemittel.

Ein drittes Befestigungsmittel besteht aus einem Hohlniet 94, der die gegenüberliegenden Wandungsabschnitte 54 miteinander verbindet, wie dies in Figur 4 anhand der Distanzhülse gezeigt ist. Der Hohlniet hat ebenfalls Flansche entsprechend den Flanschen 84. Er besitzt jedoch keinen zapfenförmigen Vorsprung mit Bund 86. Der Hohlniet steht somit nicht oder nur kaum gegenüber der Außenseite des Gehäuses 52 vor. Beim Einschieben des Gehäuses 52 in die Halterung 22 kommt der Hohlniet auf Höhe eines Langloches 224 zu liegen, wobei das Langloch 224 seine größte Ausdehnung in Längsrichtung des langgestreckten Gehäuses 52 hat. Eine selbstschneidende oder selbstfurchende Schraube 96 wird von außen durch das Langloch 224, das als Befestigungsöffnung dient, in den Hohlniet 94, der als Mutter dient, eingedreht.

Im Inneren des Gehäuses 52 ist im übrigen noch oberhalb des Hohlniets 94 und der Distanzhülse 82 eine Gasführungslanze 100 vorgesehen, über die Gas in das Innere des Kopf-Seitengassacks strömt. Sobald der Seitengassack aufgeblasen wird, schwenkt die Klappe 58 nach unten und gibt den Weg zum Entfalten des Seitengassacks 60 frei.

## Patentansprüche

1. Haltegriffkonsole (10) zur Anbringung eines Haltegriffs in Kraftfahrzeugen, **dadurch gekennzeichnet, daß** eine Halterung (22) zur Aufnahme eines Seitengassack-Moduls vorgesehen ist.

2. Haltegriffkonsole (10) nach Anspruch 1, **dadurch gekennzeichnet, daß** die Halterung (22) für das Seitengassack-Modul einteilig mit der Haltegriffkonsole (10) ausgebildet ist.

3. Haltegriffkonsole (10) nach Anspruch 1 oder 2, **dadurch gekennzeichnet, daß** die Haltegriffkonsole (10) aus Blech gebildet ist.

4. Haltegriffkonsole (10) nach Anspruch 3, **dadurch gekennzeichnet, daß** die Haltegriffkonsole (10) aus einem Halteblech (12) mit einer 90°-Abbiegung gebildet ist, wobei im Bereich der Biegestelle mehrere entgegen der Hauptbiegerichtung ausgestellte Teilabschnitte (26) vorgesehen sind.

5. Haltegriffkonsole (10) nach einem der vorhergehenden Ansprüche, **dadurch gekennzeichnet, daß** die Halterung (22) Befestigungsöffnungen in Form von Durchstellungen (24) aufweist.

6. Haltegriffkonsole (10) nach einem der vorhergehenden Ansprüche, **dadurch gekennzeichnet, daß** in die Halterung (22) Aussparungen (28) eingestanzt sind.

7. Haltegriffkonsole (10) nach einem der vorhergehenden Ansprüche, **dadurch gekennzeichnet, daß** die Halterung (22), in einem Querschnitt senkrecht zur Biegekante des Halteblechs (12) gesehen, bogenförmig verläuft.

8. Haltegriffkonsole (10) nach einem der vorhergehenden Ansprüche, **dadurch gekennzeichnet, daß** sich die Halterung (22) zur Fahrzeuginnenseite hin erstreckt.

9. Baugruppe aus einer Haltegriffkonsole (10) nach einem der vorhergehenden Ansprüche und einem daran formschlüssig befestigten Seitengassack-Modul (50), das ein langgestrecktes Aufnahmegehäuse (52) mit einem darin enthaltenen Kopf-Seitengassack (60) aufweist, wobei das Aufnahmegehäuse (52) über die Haltegriffkonsole (10) am Dachrahmen eines Fahrzeugs befestigbar ist.

10. Baugruppe nach Anspruch 9, **dadurch gekennzeichnet, daß** wenigstens ein Befestigungsmittel vorgesehen ist, das ein vom Gehäuse (52) abstehendes Haltemittel (70; 86) und eine entsprechende Befestigungsöffnung (24; 124) in der Halterung (22) umfaßt, wobei das Haltemittel (70; 86) in die Befestigungsöffnung (24; 124) eindringt und das Gehäuse (52) an der Halterung (22) fixiert.

11. Baugruppe nach Anspruch 10, **dadurch gekennzeichnet, daß** ein erstes Befestigungsmittel vorgesehen ist, dessen Haltemittel eine von der Außenseite des Gehäuses (52) vorstehende Rastnase (70) ist.

12. Baugruppe nach Anspruch 10 oder 11, **dadurch gekennzeichnet, daß** in der Halterung (22) eine Führungsbahn (90) vorgesehen ist, die beim Zusammenschieben des Gehäuses (52) und der Haltegriffkonsole (10) das vom Gehäuse (52) seitlich abstehende Haltemittel (86) aufnimmt und in die Befestigungsöffnung (124) in der Halterung (22) führt.

13. Baugruppe nach einem der vorhergehenden Ansprüche 10-12, **dadurch gekennzeichnet, daß** ein Befestigungsmittel vorgesehen ist, das eine Befestigungsöffnung (224) in der Halterung (22) aufweist, die als in Richtung der Längserstreckung des Gehäuses (52) seine größte Ausdehnung aufweisendes Langloch ausgebildet ist.

14. Baugruppe nach Anspruch 13, **dadurch gekennzeichnet, daß** das Befestigungsmittel mit dem Langloch ein Haltemittel umfaßt, welches gegenüberliegende Wandungsabschnitte (54) des Gehäuses (52) miteinander verbindet und als Hohlniet (94) oder Distanzhülse (82) ausgebildet ist.

15. Baugruppe nach Anspruch 14, **dadurch gekennzeichnet, daß** das Haltemittel ein Hohlniet (94) ist und daß die Halterung (22) mit dem Gehäuse (52) über eine Schraube (96) verbunden ist, die in den Hohlniet (94) eingedreht ist.

## Claims

1. A hand grip bracket (10) for the attachment of a hand grip in motor vehicles, **characterized in that** a holder (22) is provided for accommodating a side gas bag module.

2. The hand grip bracket (10) as claimed in claim 1, **characterized in that** the holder (22) for the side gas bag module is formed in one piece with the hand grip bracket (10).

3. The hand grip bracket (10) as claimed in claim 1 or 2, **characterized in that** the hand grip bracket (10) is made of sheet metal.

4. The hand grip bracket (10) as claimed in claim 3, **characterized in that** the hand grip bracket (10) is made of a holder (12) of sheet metal having a 90° bend, a plurality of partial sections (26) being provided in the area of the bending location which are bent out against the main bending direction.

5. The hand grip bracket (10) as claimed in any of the preceding claims, **characterized in that** the holder (22) has mounting holes in the form of bent-out portions (24).

6. The hand grip bracket (10) as claimed in any of the preceding claims, **characterized in that** the holder (22) has cutouts (28) punched out therein.

7. The hand grip bracket (10) as claimed in any of the preceding claims, **characterized in that** the holder (22), as viewed in a cross-section perpendicular to the bending edge of the holding plate (12), extends in the shape of an arc.

8. The hand grip bracket (10) as claimed in any of the preceding claims, **characterized in that** the holder (22) extends towards the inside of the vehicle.

9. An assembly of a hand grip bracket (10) as claimed in any of the preceding claims and a side gas bag module (50) attached thereto in a form-fitting manner, which side gas bag module has an elongated accommodation housing (52) with a head side gas bag (60) contained therein, the accommodation housing (52) being adapted to be attached to the roof frame of a vehicle via the hand grip bracket (10).

10. The assembly as claimed in claim 9, **characterized in that** at least one fastening means is provided which comprises a holding means (70; 86) projecting from the housing (52) and a corresponding mounting hole (24; 124) in the holder (22), the holding means (70; 86) penetrating into the mounting hole (24; 124) and fixing the housing (52) in place at the holder (22).

11. The assembly as claimed in claim 10, **characterized in that** a first fastening means is provided the holding means of which is a latching nose (70) projecting from the outer side of the housing (52).

12. The assembly as claimed in claim 10 or 11, **characterized in that** in the holder (22) a guideway (90) is provided, which accommodates the holding means (86) laterally projecting from the housing (52) and guides the same into the mounting hole (124) in the holder (22) when the housing (52) and the hand grip bracket (10) are pushed together.

13. The assembly as claimed in any of the preceding claims 10 to 12, **characterized in that** a fastening means is provided which has a mounting hole (224) in the holder (22) which is made in the form of an oblong hole having its maximum dimension in the direction of the longitudinal extent of the housing (52).

14. The assembly as claimed in claim 13, **characterized in that** the fastening means provided with the oblong hole comprises a holding means which connects opposing wall portions (54) of the housing (52) with each other and is made in the form of a hollow rivet (94) or spacer sleeve (82).

15. The assembly as claimed in claim 14, **characterized in that** the holding means is a hollow rivet (94) and that the holder (22) is connected with the housing (52) via a screw (96) which has been screwed into the hollow rivet (94).

## Revendications

1. Console de poignée de maintien (10) pour monter une poignée de maintien dans des véhicules, **caractérisée en ce qu'**il est prévu un support (22) destiné à recevoir un module de coussin à gaz latéral.

2. Console de poignée de maintien (10) selon la revendication 1, **caractérisée en ce que** le support (22) pour le module de coussin à gaz latéral est réalisé d'une seule pièce avec la console de poignée de maintien (10).

3. Console de poignée de maintien (10) selon la revendication 1 ou 2, **caractérisée en ce que** la console de poignée de maintien (10) est réalisée en tôle.

4. Console de poignée de maintien (10) selon la revendication 3, **caractérisée en ce que** la console de poignée de maintien (10) est réalisée en une tôle de maintien (12) avec une courbure de 90°, plusieurs tronçons partiels (26) orientés à l'encontre de la direction de courbure principale étant prévus dans la région du point de courbure.

5. Console de poignée de maintien (10) selon l'une quelconque des revendications précédentes, **caractérisée en ce que** le support (22) présente des ouvertures de fixation sous forme de découpes repliées (24).

6. Console de poignée de maintien (10) selon l'une quelconque des revendications précédentes, **caractérisée en ce que** des évidements (28) sont poinçonnés dans le support (22).

7. Console de poignée de maintien (10) selon l'une quelconque des revendications précédentes, **caractérisée en ce que** vu en section transversale perpendiculairement à l'arête de courbure de la tôle de maintien, le support (22) s'étend en forme d'arc (12).

8. Console de poignée de maintien (10) selon l'une quelconque des revendications précédentes, **caractérisée en ce que** le support (22) s'étend vers l'intérieur du véhicule.

9. Ensemble constitué par une console de poignée de maintien (10) selon l'une quelconque des revendications précédentes, et par un module de coussin à gaz latéral (50) fixé sur celle-ci par coopération de formes et présentant un boîtier de réception (52) allongé avec un coussin à gaz latéral (60) contenu dans celui-ci, le boîtier de réception (52) pouvant être fixé par l'intermédiaire de la console de poignée de maintien (10) au cadre de toit d'un véhicule.

10. Ensemble selon la revendication 9, **caractérisé en ce qu'**il est prévu au moins un moyen de fixation qui comprend un moyen de retenue (70 ; 86) et une ouverture de fixation (24 ; 124) correspondante dans le support (22), le moyen de retenue (70 ; 86) pénétrant dans l'ouverture de fixation (24 ; 124) et fixant le boîtier (52) sur le support (22).

11. Ensemble selon la revendication 10, **caractérisé en ce qu'**il est prévu un premier moyen de fixation dont le moyen de retenue est un ergot d'enclenchement (70) faisant saillie depuis la face extérieure du boîtier (52).

12. Ensemble selon la revendication 10 ou 11, **caractérisé en ce que** dans le support (22) est prévu une glissière de guidage (90) qui, lorsqu'on pousse l'un contre l'autre le boîtier (52) et la console de poignée de maintien (10), reçoit le moyen de retenue (86) dépassant latéralement du boîtier (52) et le guide dans l'ouverture de fixation (124) dans le support (22).

13. Ensemble selon l'une quelconque des revendications 10 à 12, **caractérisé en ce qu'**il est prévu un moyen de fixation qui présente une ouverture de fixation (224) dans le support, laquelle est réalisée sous forme de trou oblong présentant sa plus grande extension en direction de l'extension longitudinale du boîtier (52).

14. Ensemble selon la revendication 13, **caractérisé en ce que** le moyen de fixation avec le trou oblong comprend un moyen de retenue qui relie l'un à l'autre des tronçons de paroi (54) opposés du boîtier (52) et qui est réalisé sous forme de rivet creux (94) ou de douille d'écartement (82).

15. Ensemble selon la revendication 14, **caractérisé en ce que** le moyen de retenue est un rivet creux (94) et **en ce que** le support (22) est relié au boîtier (52) par une vis (96) qui est vissée dans le rivet creux (94).
